# EUROPEAN PATENT APPLICATION

(11) **EP 2 426 395 A1**
(43) Date of publication of application: **07.03.2012**
(21) Application number: 10789270.5
(22) Date of filing: 17.02.2010
(51) Int. Cl.: F21S 2/00, G02F 1/13357, F21Y 101/02, F21Y 103/00

(54) **ILLUMINATION DEVICE, DISPLAY DEVICE, AND TELEVISION RECEIVER**

(30) Priority: 15.06.2009 JP 2009141745
(71) Applicant: Sharp Kabushiki Kaisha, Osaka-shi, Osaka 545-8522 (JP)
(72) Inventor: YOKOTA, Masashi, Osaka-shi, Osaka 545-8522 (JP)
(74) Representative: Müller-Boré & Partner Patentanwälte
(86) International application number: PCT/JP2010/052311
(87) International publication number: WO 2010/146892

(57) **Abstract**

The backlight unit (49) of a display device (69) having a liquid crystal display panel (59) is provided with a chassis (41), a diffusion plate (43) supported by the chassis, and a light source for irradiating the diffusion plate with light. A reflective sheet (42) for reflecting light towards the diffusion plate is combined with a light-emitting module (MJ), which is a light source. An inclined surface (42a) such that the light emitted from the light-emitting module in the lateral direction is reflected toward the diffusion plate is formed on the peripheral edge of the reflective sheet. The inclined surface is subjected to a reflectance reduction treatment. The reflectance reduction treatment involves forming a plurality of small holes (46A) in the inclined surface, for example.

## Description

### Technical Field

The present invention relates to illumination devices, display devices incorporating an illumination device, and television receivers provided with a display device.

### Background Art

A display device employing a non-luminous display panel, such as a liquid crystal display panel, is commonly combined with an illumination device which illuminates the display panel from behind. As a light source in this type of illumination device, many types are used, such as cold cathode fluorescent tubes and light emitting devices. Light emitting devices include light emitting diodes (hereinafter "LEDs"), organic electroluminescence devices, and inorganic electroluminescence devices, among which LEDs are mainstream. Patent Document 1 listed below discloses an illumination device which adopts an LED as a light source.

In the illumination device disclosed in Patent Document 1, as shown in Fig. 11, LEDs 122 are mounted on a mounting board 121, and in addition lenses 124 covering the LEDs 122 are fitted to the mounting board 121. The mounting board 121, the LEDs 122, and the lenses 124 together constitute a light emitting module mj. A number of such modules mj are arrayed in a matrix to constitute a planar light source.

When an illumination device of the type disclosed in Patent Document 1, or an illumination device in which a plurality of cold cathode fluorescent tubes 103 are arranged side by side, is combined with a display device, introducing the light from a light source directly into the illumination device causes uneven brightness on the screen; to prevent this, between the light source and the display device, a diffusive plate is arranged which diffuses light. A diffusive plate commonly counts as part of an illumination device.

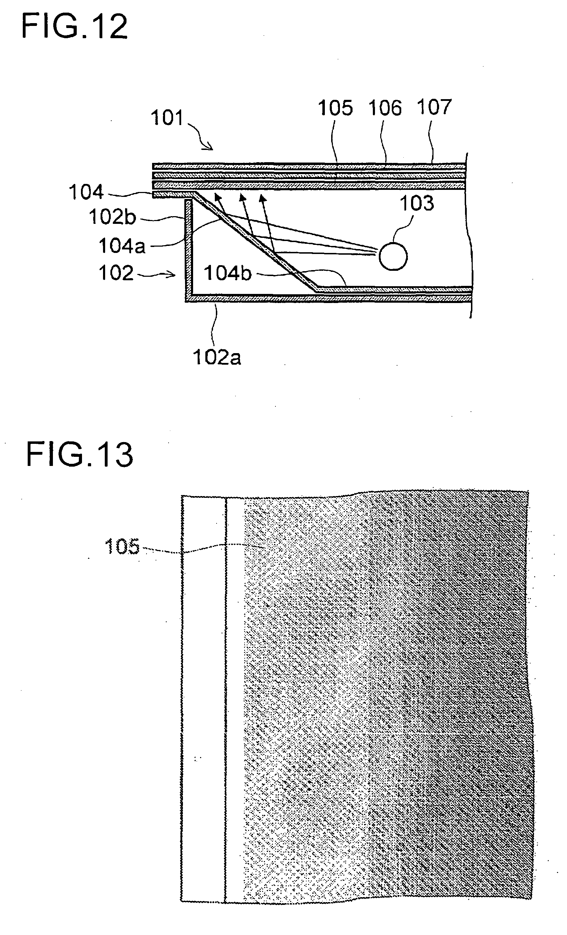

An example of the structure of an illumination device provided with a diffusive plate is shown in Fig. 12. The illumination device 101 is assembled on a base constituted by a chassis 102 made of sheet metal. The chassis 102 is shaped like a tray, and has an upright wall 102b formed along the circumference of a rectangular main plane 102a. On the top surface of the main plane 102a, a plurality of cold cathode fluorescent tubes 103 are arranged side by side, at predetermined intervals.

Over the chassis 102, a reflective sheet 104 is laid which has, as seen in a plan view, a shape geometrically similar to that of the chassis 102. Of a peripheral part of the reflective sheet 104, an outermost part is placed on the upright wall 102b of the chassis 102, and a part inward of it forms an inclined surface 104a which descends toward the main plane 102a. The inclined surface 104a is, at its lowest end, contiguous with a main plane 104b which lies over the main plane 102a. An example of an illumination device so structured is seen in, for example, Patent Document 2 listed below.

Above the upright wall 102b, over the reflective sheet 104, a diffusive plate 105 is placed. Further over, a prism sheet 106, and then a microlens sheet 106, are placed.

When the cold cathode fluorescent tubes 103 are lit, the light emanating from the cold cathode fluorescent tubes 103 shines the diffusive plate 105 from behind. Part of the light that does not travel directly toward the diffusive plate 105 is reflected on the reflective sheet 104 toward the diffusive plate 105. The light is diffused in the diffusive plate 105, so that, seen from outside, the diffusive plate 105 appears to be a surface with comparatively even luminance. The light emanating sideways from the cold cathode fluorescent tubes 103 strikes the inclined surface 104a of the reflective sheet 104 and is reflected toward the diffusive plate 105. Thus, even with no cold cathode fluorescent tube 103 arranged right under a peripheral part of the diffusive plate 105, satisfactory luminance is obtained in the peripheral part. While cold cathode fluorescent tubes 103 are used as a light source in the exemplary structure that has been discussed, needless to say, light emitting devices such as LEDs may instead be used as a light source.

### List of Citations

### Patent Literature

Patent Document 1: 2008-41546
Patent Document 2: 2005-19065

### Summary of Invention

### Technical Problem

An inclined surface of a reflective sheet, like that seen in the exemplary structure shown in Fig. 12, on one hand has the advantage that no light source needs to be arranged right under a peripheral part of a diffusive plate, but on the other hand has the disadvantage that, as a result of light emanating from a number of light sources concentrating in the peripheral part, an amount of light larger than is necessary may be reflected toward the diffusive plate. This may result in, as shown in Fig. 13, higher luminance only in a peripheral part of a diffusive plate. Since an illumination device to be combined with a display device is required to offer even luminance all across a diffusive plate, such uneven luminance needs to be overcome.

The present invention has been made against the background discussed above, and is directed to an illumination device provided with a reflective sheet that reflects light from a light source toward a diffusive plate, in order to achieve the aim of preventing an inclined surface formed in a peripheral part of the reflective sheet from giving the diffusive plate unnecessarily high luminance.

### Solution to Problem

According to a preferred embodiment of the invention, an illumination device is provided with: a diffusive plate; a chassis supporting the diffusive plate; a light source arranged on the chassis and shining light on the diffusive plate; and a reflective sheet covering the chassis entirely and reflecting light from the light source toward the diffusive plate. Here, in a peripheral part of the reflective sheet, an inclined surface is formed, which reflects light emanating sideways from the light source toward the diffusive plate, and is treated with reflection reduction treatment.

With this structure, no light source needs to be arranged right under the peripheral part of the diffusive plate. On the other hand, the reflection reduction treatment applied to the inclined surface of the reflective sheet reduces the amount of light reflected on it to travel toward the diffusive plate, and this prevents disproportionately higher luminance in the peripheral part, than elsewhere, of the diffusive plate.

According to another preferred embodiment of the invention, in the illumination device structured as described above, the reflection reduction treatment is achieved by forming a number of small apertures in the inclined surface.

With this structure, the apertures can be punched in the molding process of the reflective sheet, and thus reflection reduction treatment can be performed efficiently.

According to another preferred embodiment of the invention, in the illumination device structured as described above, the reflection reduction treatment is achieved by forming a number of surface irregularities in the inclined surface.

With this structure, the surface irregularities can be formed in the molding process of the reflective sheet, and thus reflection reduction treatment can be performed efficiently.

According to another preferred embodiment of the invention, in the illumination device structured as described above, the reflection reduction treatment is achieved by forming a step-like portion in the inclined surface.

With this structure, the step-like portion can be formed in the molding process of the reflective sheet, and thus reflection reduction treatment can be performed efficiently.

According to another preferred embodiment of the invention, in the illumination device structured as described above, the reflection reduction treatment is achieved by applying printing with higher light absorptance than the inclined surface itself to the inclined surface.

With this structure, by a technique of printing, reflection reduction treatment can be performed efficiently.

According to another preferred embodiment of the invention, in the illumination device structured as described above, the reflection reduction treatment is achieved by bonding a sheet with higher light absorptance than the inclined surface itself to the inclined surface.

With this structure, by a method of applying a sheet, reflection reduction treatment can be performed efficiently.

According to another preferred embodiment of the invention, in the illumination device structured as described above, the light source is a light emitting device.

With this structure, by use of a light emitting device with high light emission efficiency, it is possible to build an illumination device with less electric power consumption.

According to another preferred embodiment of the invention, in the illumination device structured as described above, the light emitting device is covered with a diffusive lens.

With this structure, the spread of light emanating from the light emitting device is large, and thus a large area can be illuminated with a comparatively small number of light emitting devices.

According to another preferred embodiment of the invention, in the illumination device structured as described above, the light emitting device is an LED.

With this structure, by use of LEDs developed with remarkably ever higher luminance in recent years, a bright illumination device can be obtained.

According to another preferred embodiment of the invention, in the illumination device structured as described above, the light source is a cold cathode fluorescent tube.

With this structure, it is possible to build an illumination device with lower electric power consumption.

According to another preferred embodiment of the invention, a display device is built which incorporates the illumination device structured as described above; and a display panel receiving light from the illumination device.

With this structure, it is possible to obtain a display device free from disproportionately higher luminance in a peripheral part than elsewhere.

According to another preferred embodiment of the invention, in the display device structured as described above, the display panel is a liquid crystal display panel.

With this structure, it is possible to obtain a liquid crystal display device free from disproportionately higher luminance in a peripheral part than elsewhere.

According to another preferred embodiment of the invention, a television receiver is built which incorporates the display device built as described above.

With this structure, it is possible to obtain a television receiver free from disproportionately higher luminance in a peripheral part, than elsewhere, of the screen.

### Advantageous Effects of the Invention

According to the present invention, even in a case where, in a peripheral part of a reflective sheet reflecting light from a light source toward a diffusive plate, an inclined surface for reflecting light emanating sideways from the light source toward the diffusive plate is formed, reflection reduction treatment applied to the inclined surface prevents an unnecessarily large amount of light from traveling from the inclined surface toward the diffusive plate, and thus prevents disproportionately higher luminance in a peripheral part, than elsewhere, of the diffusive plate.

### Brief Description of Drawings

[Fig. 1] is an exploded perspective view of a display device incorporating an illumination device according to a preferred embodiment of the invention;
[Fig. 2] is a partial sectional view of an illumination device of a first embodiment of the invention;
[Fig. 3] is a partial plan view of the illumination device in Fig. 2;
[Fig. 4] is a partial sectional view of an illumination device of a second embodiment of the invention;
[Fig. 5] is a partial plan view of the illumination device in Fig. 4;
[Fig. 6] is a partial sectional view of an illumination device of a third embodiment of the invention;
[Fig. 7] is a partial plan view of the illumination device in Fig. 6;
[Fig. 8] is a partial sectional view of an illumination device of a fourth embodiment of the invention;
[Fig. 9] is a partial plan view of the illumination device in Fig. 8;
[Fig. 10] is an exploded perspective view of a television receiver;
[Fig. 11] is an exploded perspective view of a conventional illumination device;
[Fig. 12] is a partial sectional view of an example of the structure of an illumination device;
[Fig. 13] is a partial plan view showing a condition on the luminance surface of a diffusive plate in the illumination device of Fig. 12;
[Fig. 14] is a graph showing how illuminance varies with the direction of radiation from an LED; and
[Fig. 15] is a diagram conceptually showing the luminance of a plurality of arrayed LEDs.

### Description of Embodiments

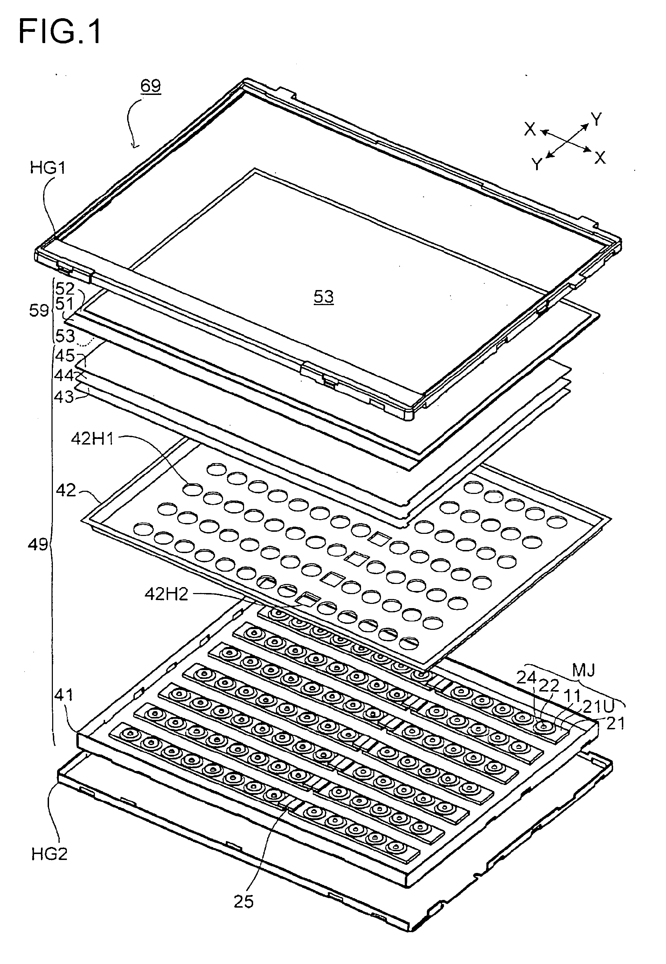

Below, a description will be given of the structure of a display device embodying the invention which is provided with an illumination device according to a preferred embodiment of the present invention, with reference to Figs. 1 to 3. In Fig. 1, the display device 69 is depicted in a state placed horizontally with its display surface pointing up.

The display device 69 employs a liquid crystal display panel 59 as a display panel. The liquid crystal display panel 59 is, along with a backlight unit 49 which illuminates it from behind, accommodated in a single housing. The housing is composed of a front housing member HG1 and a rear housing member HG2 put together.

The liquid crystal display panel 59 is composed of an active matrix substrate 51, which includes switching devices such as thin-film transistors (TFTs), and a counter substrate 52, which lies opposite the active matrix substrate 51, bonded together with a sealing member (not shown) between them, with liquid crystal filling between the active matrix substrate 51 and the counter substrate 52.

A polarizing film 53 is bonded on the light-input surface of the active matrix substrate 51, and another polarizing film 53 is bonded on the light-output surface of the counter substrate 52. The liquid crystal display panel 59 forms an image by exploiting variation of light transmittance resulting from inclination of liquid crystal molecules.

The backlight unit 49, which is an implementation of an illumination device according to the present invention, includes a light emitting module MJ, a chassis 41, a large-format reflective sheet 42, a diffusive plate 43, a prism sheet 44, and a microlens sheet 45.

The chassis 41 is shaped like a tray, and has an upright wall 41b formed along the circumference of a rectangular main plane 41 a.

The light emitting module MJ includes a mounting board 21, an LED 22 as a light emitting device, a diffusive lens 24, and a built-in reflective sheet 11.

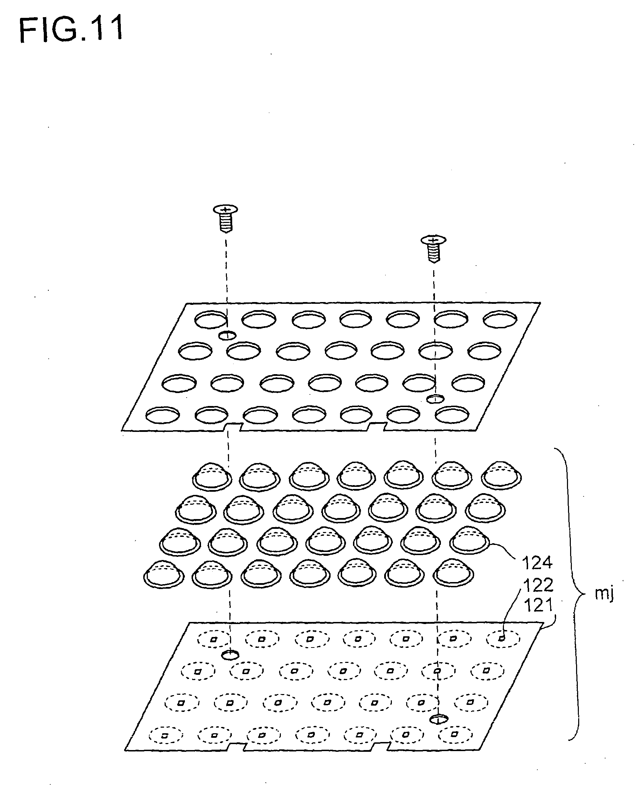

Now, the significance of the diffusive lens 24 will be discussed. Consider, for example, the illumination device disclosed in Patent Document 1. In the illumination device shown in Fig. 11, LEDs 122 are combined with lenses 124, to be sure, but the spread of the light from individual LEDs 122 is small. Thus, to obtain even luminance, a large number of light emitting modules mj need to be arrayed densely. This leads to increased component and mounting costs, resulting in high overall cost.

The development of LEDs with ever higher luminance in recent years has made it possible to obtain the amount of light sufficient to illuminate an entire screen with a comparatively small number of LEDs. Even with high-luminance LEDs, however, dispersedly arraying them inevitably ends up with uneven luminance. It is therefore preferable to use, in combination with individual LEDs, lenses with high light-diffusing performance (in the present description, such lenses are referred to as "diffusive lenses").

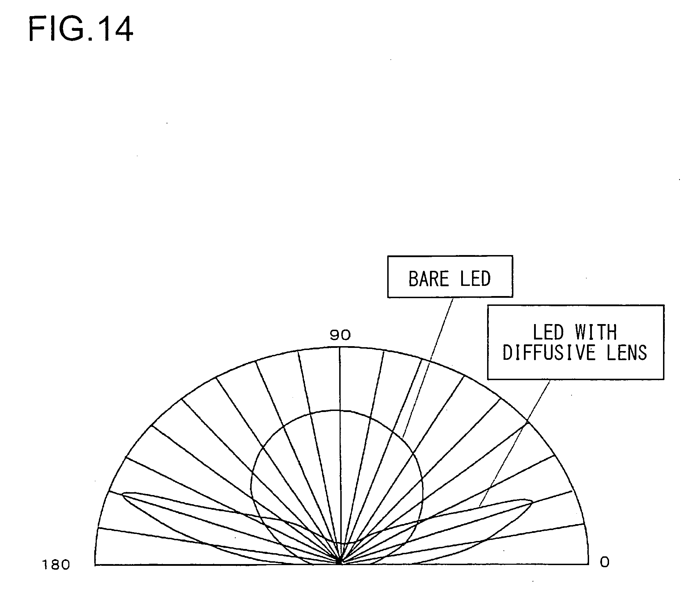

Fig. 14 is a graph showing how illuminance (in lux) varies with the direction of radiation for a bare LED and for an LED fitted with a diffusive lens. With a bare LED, the peak lies at 90°, which is the angle of the optical axis, and the farther apart from there, the illuminance sharply drops. In contrast, with an LED fitted with a diffusive lens, it is possible, while enlarging the range in which a certain degree of illuminance or higher is obtained, to set a peak of illuminance at an angle different from that of the optical axis. Needless to say, the illustrated pattern of illuminance can be varied at will by appropriate design of the diffusive lens.

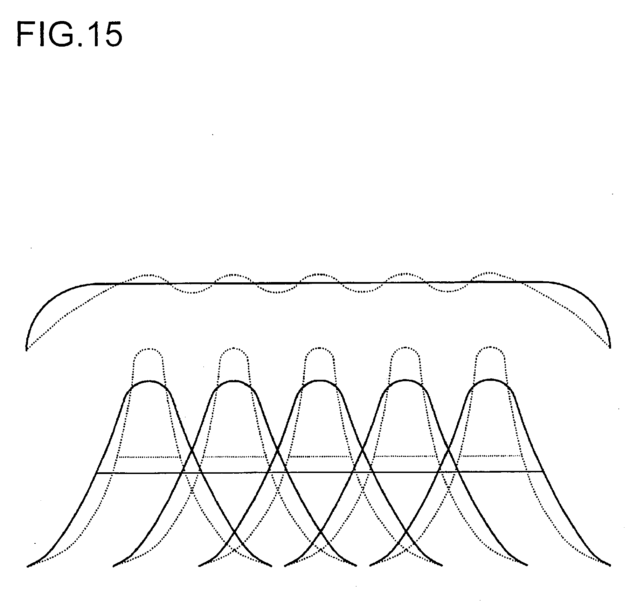

Fig. 15 conceptually shows the overall luminance of a plurality of arrayed LEDs. In the diagram, the waves of solid lines represent the luminance of LEDs fitted with diffusive lenses, and the waves of dotted lines represent the luminance of bare LEDs. A horizontal line in a wave represents the width of the wave at half the peak luminance (the full width at half maximum). With LEDs fitted with diffusive lenses, each wave can be made broader, and thus it is easy to make the overall luminance of arrayed LEDs flat as indicated by a solid line in an upper part of the diagram. With bare LEDs, by contrast, each wave is high but narrow, with a result that the overall luminance of arrayed LEDs inevitably describes waves. To avoid an image with such uneven luminance, there is almost no choice but to adopt LEDs fitted with diffusive lenses.

Out of the above considerations, the light emitting module MJ includes the diffusive lens 24.

The mounting board 21 has the shape of an elongate rectangular, and on its top surface serving as a mounting surface 21U, a plurality of electrodes (not shown) are formed at predetermined intervals in the lengthwise direction, with the LED 22 mounted on those electrodes. One mounting board 21 is common to a plurality of LEDs 22. That is, as shown in Fig. 1, a plurality of sets of an LED 22, a diffusive lens 24, and a built-in reflective sheet 11 combined together are arranged on each mounting board 21, at predetermined intervals in its lengthwise direction.

The diffusive lens 24 is circular as seen in a plan view, has a plurality of feet 24a at the bottom, and is fitted to the mounting board 21 with the tips of the feet 24a bonded to the mourning surface 21U of the mounting board 21 with adhesive. Owing to the provision of the feet 24a, a gap is secured between the mounting board 21 and the diffusive lens 24. A stream of air passing through the gap cools the LED 22. Provided that sufficient heat rejection is attained, it is possible to use, instead, an integrally-molded light emitting module having an LED embedded in a diffusive lens.

There are many types of LEDs that can be used as the LED 22. For example, it is possible to use an LED of the type in which an LED chip emitting blue light is combined with a phosphor receiving the light from the LED chip and emitting yellow light by fluorescence so that the blue and yellow light emitted from them mix to produce white light. It is also possible to use an LED of the type in which an LED chip emitting blue light is combined with phosphors receiving the light from the LED chip and emitting green and red light, respectively, by fluorescence so that the blue, green, and red light emitted from them mix to produce white light.

It is also possible to use an LED of the type in which LED chips emitting red and blue light, respectively, are combined with a phosphor receiving the blue light from the LED chip emitting blue light and emitting green light by fluorescence so that the blue, green, and red light emitted from them mix to produce white light.

It is also possible to use an LED of the type in which LED chips emitting red, green, and blue light, respectively, are combined together so that the red, green, and blue light emitted from them mix to produce white light.

In Fig. 1, mounting boards 21s having five light emitting modules MJ arranged on each of them and mounting boards 21s having eight light emitting modules MJ arranged on each of them are used in combination. A mounting board 21 having five light emitting modules MJ and a mounting board 21 having eight light emitting modules MJ are coupled together by connecting together connectors 25 attached respectively to the adjacent edges of those mounting boards 21 in their lengthwise direction (needless to say, of the connectors 25, one is male and the other is female).

A plurality of sets of a mounting board 21 having five light emitting modules MJ and a mounting board 21 having eight light emitting modules MJ combined together are arranged parallel to one another on the chassis 41. The direction in which the light emitting modules MJ are arranged on each mounting board 21 is the lengthwise direction of the chassis 41, that is, the direction indicated by arrows X. The direction in which the sets of two mounting boards 21s combined together are arranged is the widthwise direction of the chassis 41, that is, the direction indicated by arrows Y. Thus, the LEDs 22 are arranged in a matrix. The mounting boards 21 s are fixed to the chassis 41 by any suitable means, such as swaging, bonding, screw-fastening, rivet-fastening, etc.

Between the mounting board 21 and the diffusive lens 24, the built-in reflective sheet 11 is arranged. The built-in reflective sheet 11 is fixed on the mounting surface 21U, at a position where the built-in reflective sheet 11 faces the bottom of the diffusive lens 24. The built-in reflective sheet 11 has a higher light reflectance than the mounting board 21. The built-in reflective sheet 11 too is circular as seen in a plan view, and is concentric with the diffusive lens 24, the built-in reflective sheet 11 having a larger diameter. In the built-in reflective sheet 11, through holes are formed through which the feet 24a of the diffusive lens 24 are put.

Over the chassis 41, the reflective sheet 42 is laid which has, as seen in a plan view, a shape geometrically similar to that of the chassis 41. The reflective sheet 42 is a sheet of foamed resin like the built-in reflective sheet 11. Of a peripheral part of the reflective sheet 42, an outermost part is placed on the upright wall 41b of the chassis 41, and a part inward of it forms an inclined surface 42a which descends toward the main plane 41a of the chassis 41. The inclined surface 42a is, at its lowest end, contiguous with a main plane 42b of the reflective sheet 42 itself. The main plane 42b lies over the built-in reflective sheets 11.

In the reflective sheet 42, at positions corresponding to the light emitting modules MJ, circular clearance openings 42H1 are formed, which are so sized that the diffusive lenses 24 can pass through them but the built-in reflective sheets 11 do not. Also in the reflective sheet 42, at positions corresponding to the connectors 25, rectangular clearance openings 42H2 are formed through which the connectors 25 are put.

When the LEDs 22 are lit, the light emanating from the LEDs 22 shines the diffusive plate 43 from behind. Part of the light that does not travel directly toward the diffusive plate 43 is reflected on the reflective sheet 42 or on the built-in reflective sheet 11 s toward the diffusive plate 43. The light is diffused inside the diffusive plate 43, so that, seen from outside, the diffusive plate 43 appears to be a surface with comparatively even luminance. The light emanating sideways from the LEDs 22 strikes the inclined surface 42a of the reflective sheet 42 and is reflected toward the diffusive plate 43.

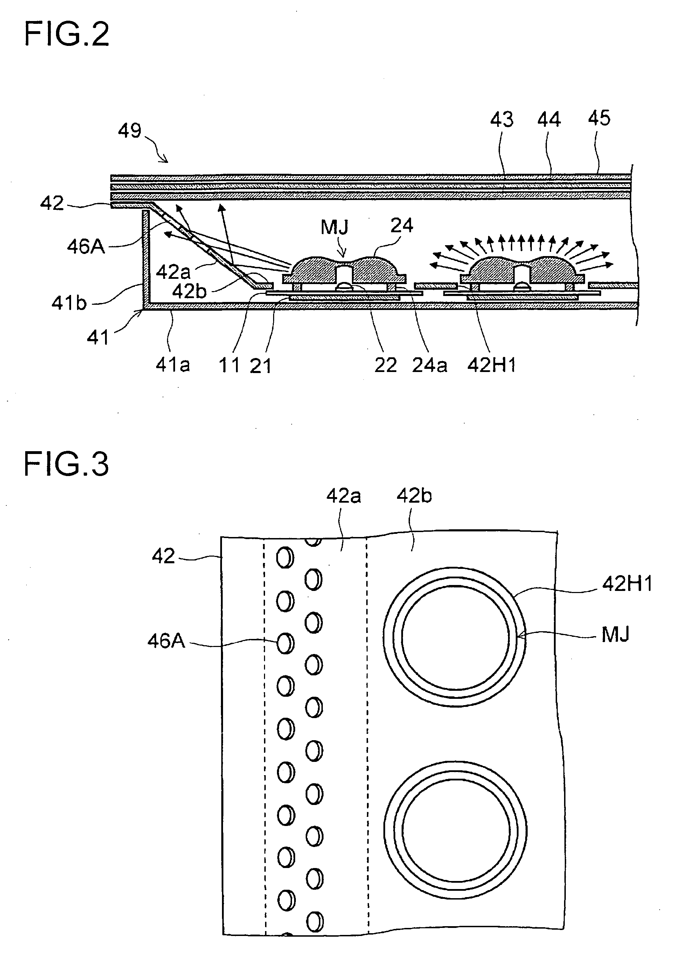

The inclined surface 42a, which, like a picture frame, surrounds the main plane 42b, is treated with reflection reduction treatment. In the backlight unit 49 according to a first embodiment of the invention shown in Figs. 2 and 3, forming a number of small apertures 46A in the inclined surface 42a constitutes reflection reduction treatment.

With the small apertures 46A formed in the inclined surface 42a, light that has reached them penetrate the inclined surface 42a to its reverse side. The light that has penetrated the inclined surface 42a to its reverse side is then repeatedly reflected between the obverse surface of the chassis 41 and the reverse surface of the diffusive plate 43, and only a slight proportion of the light travels back through the small apertures 46A to the obverse side of the reflective sheet 42. This reduces the amount of light that is reflected on the inclined surface 42a so as to travel toward the diffusive plate 43, and prevents disproportionately higher luminosity in a peripheral part, than elsewhere, of the diffusive plate 43.

The size, intervals, positions in the inclined surface 42a, etc. of the small apertures 46A are preferably optimized through experiments. A large number of small apertures 46A can be punched all at once in the molding process of the reflective sheet 42, and thus reflection reduction treatment can be performed efficiently. As the case may be, the punched parts may be left unsevered, with tear-off perforations formed instead, so that they are pushed off to the reverse side as necessary.

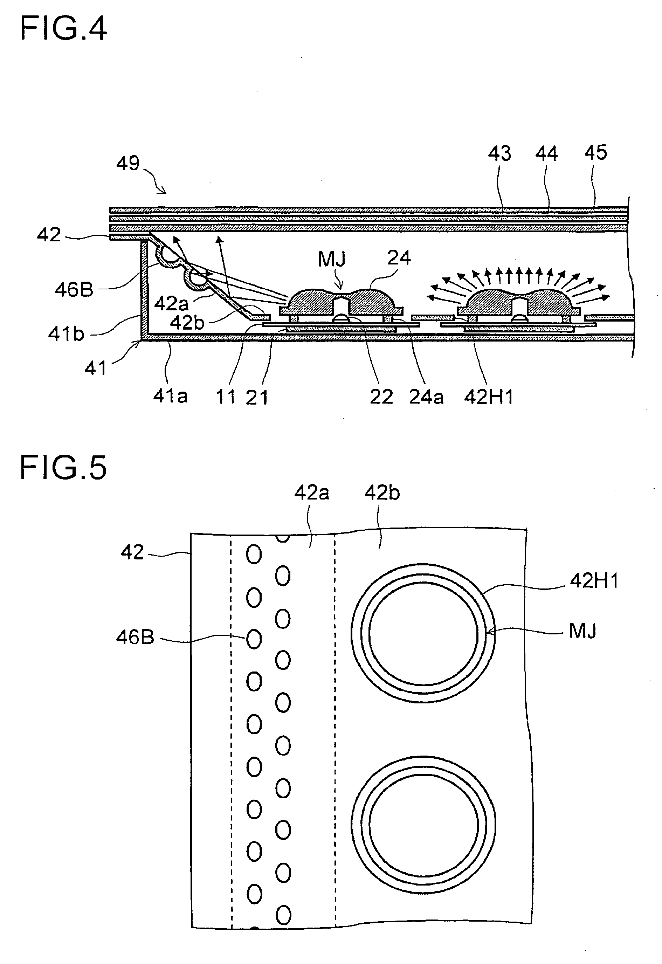

In the backlight unit 49 according to a second embodiment of the invention shown in Figs. 4 and 5, forming a large number of surface irregularities in the inclined surface 42a constitutes reflection reduction treatment. Here, a large number of hemispherical concavities (dimples) 46B are formed in the inclined surface 42a.

The concavities 46B, unlike the inclined surface 42a around them, do not uniformly reflect light toward the diffusive plate 43, but reflect light also in different directions than toward the diffusive plate 43. This reduces the amount of light that is reflected on the inclined surface 42a so as to travel toward the diffusive plate 43, and prevents disproportionately higher luminosity in a peripheral part, than elsewhere, of the diffusive plate 43.

The shape, size, intervals, positions in the inclined surface 42a, etc. of the concavities 46B are preferably optimized through experiments. A large number of concavities 46B can be formed all at once in the molding process of the reflective sheet 42, and thus reflection reduction treatment can be performed efficiently.

The shape of the concavities 46B is not limited to hemispherical; they may instead be given any of various shapes including conical, triangular-pyramidal, quadrangular-pyramidal, cylindrical, and parallelepipedal. Concavities may be reversed into projections so that projections constitute surface irregularities, Concavities may be mixed with projections.

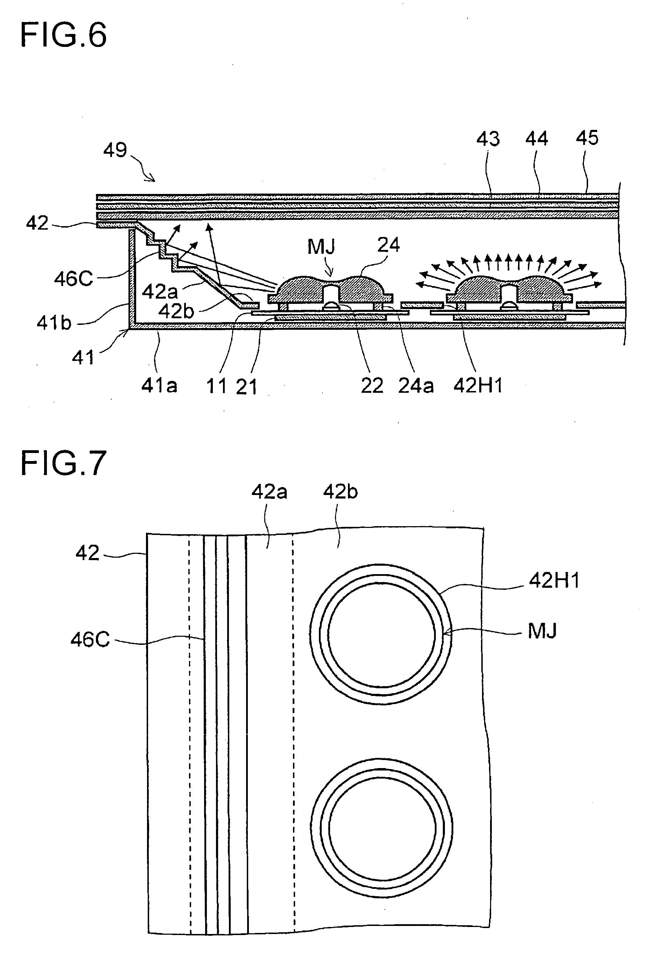

In the backlight unit 49 according to a third embodiment of the invention shown in Figs. 6 and 7, forming step-like portions 46C in the inclined surface 42a constitutes reflection reduction treatment.

The step-like portions 46C, unlike the flat part of the inclined surface 42a around it, do not reflect light toward the diffusive plate 43, but reflect light in different directions than the flat part does. This reduces the overall amount of light reflected on the inclined surface 42a so as to travel toward the diffusive plate 43. This prevents disproportionately higher luminosity in a peripheral part, than elsewhere, of the diffusive plate 43.

The shape, position in the inclined surface 42a, etc. of the step-like portions 46C are preferably optimized through experiments. A large number of step-like portions 46C can be formed all at once in the molding process of the reflective sheet 42, and thus reflection reduction treatment can be performed efficiently.

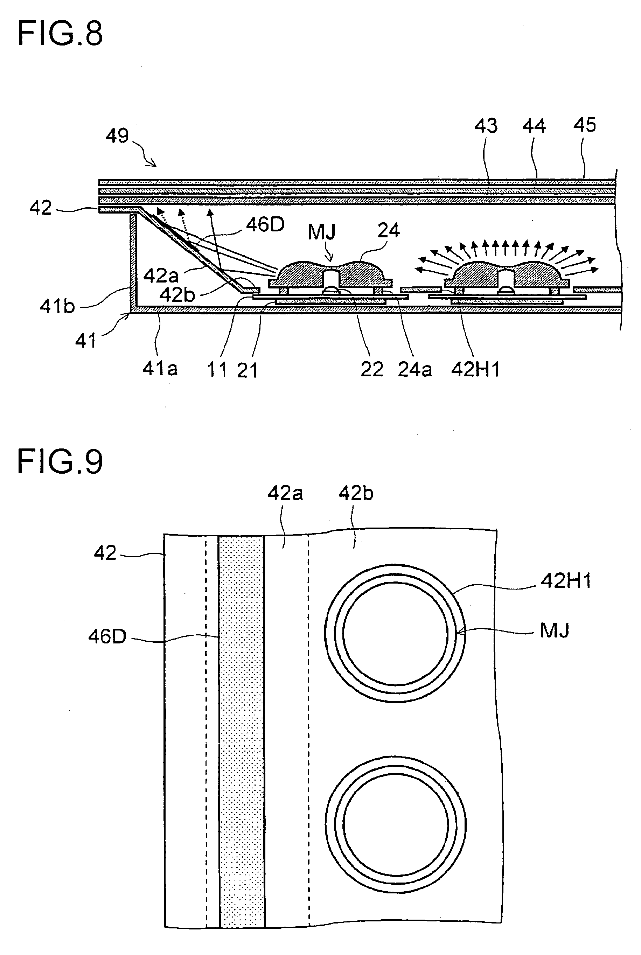

In the backlight unit 49 according to a fourth embodiment of the invention shown in Figs. 8 and 9, applying printing with higher light absorptance than the inclined surface itself to the inclined surface 42a constitutes reflection reduction treatment.

In the printed portion 46D, dark-color ink is applied in a dotted pattern composed of a large number of dots, or in a striped or lattice pattern composed of arrayed lines, to obtain higher light absorptance. Depending on the type of ink, it may be applied in a solidly filled area.

The printed portion 46D with increased light absorptance reflects less light than the non-printed portion, and this reduces the overall amount of light reflected on the inclined surface 42a so as to travel toward the diffusive plate 43. This prevents disproportionately higher luminosity in a peripheral part, than elsewhere, of the diffusive plate 43.

The light absorptance, area, position on the inclined surface 42a, etc. of the printed portion 46D are preferably optimized through experiments. By a printing technique such as screen printing, reflection reduction treatment can be performed efficiently.

Instead of printing, a sheet with higher light absorptance than the inclined surface itself may be bonded to the inclined surface 42a. This too allows reflection reduction treatment to be performed efficiently.

The mentioning above of specific methods for reflection reduction treatment is not meant to be restrictive; more than one of them may be adopted in combination.

Any of the embodiments described above may be implemented by use of cold cathode fluorescent tubes as light emitting devices.

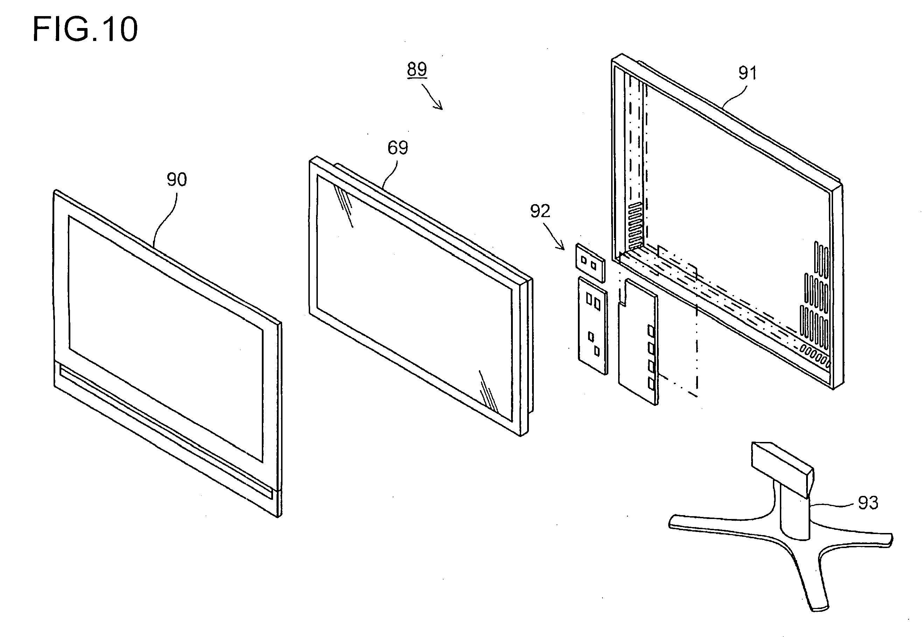

Fig. 10 shows an example of the construction of a television receiver incorporating the display device 69. The television receiver 89 has the display device 69 and a set of control boards 92 accommodated in a cabinet composed of a front cabinet 90 and a rear cabinet 91, the cabinet being supported on a stand 93.

While the present invention has been described above by way of preferred embodiments, the embodiments are in no way meant to limit the scope of the invention; the invention may be carried out with many modifications made without departing from the spirit of the invention.

### Industrial Applicability

The present invention finds wide application in illumination devices in which light from a light source is shone on a diffusive plate. The present invention also finds wide application in display devices that include such an illumination device, and in television receivers that are provided with such a display device.

### List of Reference Signs

- 49: backlight unit
- 41: chassis
- 43: diffusive plate
- MJ: light emitting module
- 11: built-in reflective sheet
- 21: mounting board
- 22: LED
- 24: diffusive lens
- 42: reflective sheet
- 42a: inclined surface
- 42b: main plane
- 46A: small aperture
- 46B: concavity
- 46C: step-like portion
- 46D: printed portion
- 59: liquid crystal display panel
- 69: display device
- 89: television receiver

## Claims

1. An illumination device, **characterized by** the provision of:
a diffusive plate;
a chassis supporting the diffusive plate;
a light source arranged on the chassis and shining light on the diffusive plate; and
a reflective sheet covering the chassis entirely and reflecting light from the light source toward the diffusive plate, wherein
in a peripheral part of the reflective sheet, an inclined surface is formed, the inclined surface reflecting light emanating sideways from the light source toward the diffusive plate, the inclined surface being treated with reflection reduction treatment.

2. The illumination device according to claim 1, further **characterized in that**
the reflection reduction treatment is achieved by forming a number of small apertures in the inclined surface.

3. The illumination device according to claim 1, further **characterized in that**
the reflection reduction treatment is achieved by forming a number of surface irregularities in the inclined surface.

4. The illumination device according to claim 1, further **characterized in that**
the reflection reduction treatment is achieved by forming a step-like portion in the inclined surface.

5. The illumination device according to claim 1, further **characterized in that**
the reflection reduction treatment is achieved by applying printing with higher light absorptance than the inclined surface itself to the inclined surface.

6. The illumination device according to claim 1, further **characterized in that**
the reflection reduction treatment is achieved by bonding a sheet with higher light absorptance than the inclined surface itself to the inclined surface.

7. The illumination device according to claim 1, further **characterized in that** the light source is a light emitting device.

8. The illumination device according to claim 7, further **characterized in that** the light emitting device is covered with a diffusive lens.

9. The illumination device according to claim 7, further **characterized in that** the light emitting device is an LED.

10. The illumination device according to claim 1, further **characterized in that** the light source is a cold cathode fluorescent tube.

11. A display device, **characterized by** the provision of:
the illumination device according to any one of claims 1 to 10; and
a display panel receiving light from the illumination device.

12. The display device according to claim 11, further **characterized in that** the display panel is a liquid crystal display panel.

13. A television receiver, **characterized by** the provision of a display device according to claim 11.
